# EUROPÄISCHE PATENTSCHRIFT

(11) **EP 2 330 685 B1**
(45) Veröffentlichungstag und Bekanntmachung des Hinweises auf die Patenterteilung: **24.01.2018**
(21) Anmeldenummer: 10186786.9
(22) Anmeldetag: 07.10.2010
(51) Int. Cl.: G01S 7/03, G01S 13/93, H01Q 1/32, H01Q 19/06, H01Q 21/06, H01Q 3/26, H01Q 25/00, G01S 13/44, G01S 13/42

(54) **Antenneneinrichtung für eine Radarsensorvorrichtung**
Antenna device for a radar sensor device
Dispositif d'antennes pour un dispositif de capteur radar

(30) Priorität: 07.12.2009 DE 102009047561
(43) Veröffentlichungstag der Anmeldung: 08.06.2011
(73) Patentinhaber: Robert Bosch GmbH, 70469 Stuttgart (DE)
(72) Erfinder: Binzer, Thomas, 70565 Stuttgart (DE); Gross, Volker, 71254 Ditzingen (DE); Walter, Thomas, 71272 Renningen (DE); Hellinger, Raphael, 71299 Wimsheim (DE)

(56) Entgegenhaltungen:
- EP-A1- 2 113 966
- EP-A2- 0 805 360
- EP-A2- 0 831 551
- EP-A2- 0 831 553
- WO-A1-03/067709
- WO-A1-03/073125

## Beschreibung

Die Erfindung betrifft eine Antenneneinrichtung für eine Radarsensorvorrichtung mit mehreren in einer Ebene in vertikaler oder horizontaler Richtung parallel zueinander angeordneten Antennenelementreihen, welche jeweils wenigstens zwei Antennenelemente, insbesondere Patch-Elemente, und zugehörige Phasenzentren aufweisen und welche in Abstand zu einer strahlformenden Zylinderlinse angeordnet sind. Darüber hinaus betrifft die Erfindung eine Radarsensorvorrichtung und eine Vorrichtung, insbesondere ein Fahrerassistenzsystem eines Kraftfahrzeugs.

### Stand der Technik

In Kraftfahrzeugen werden zunehmend Radarsensoren zur Erfassung des Verkehrsumfelds im Rahmen von Fahrerassistenzsystemen eingesetzt, beispielsweise zur radargestützten Abstandsregelung (Adaptive Cruise Control-Systeme / ACC). Ein derartiges Fahrgeschwindigkeitsregelungssystem ist beispielsweise aus Robert Bosch GmbH, "Adaptive Fahrgeschwindigkeitsregelung ACC", Gelbe Reihe, Ausgabe 2002, Technische Unterrichtung, bekannt. Eine wichtige Messgröße der Radarsensoren mit dem Einsatzgebiet im Kraftfahrzeugbereich ist neben der Entfernung und der Geschwindigkeit auch der Winkel von Objekten. Hierbei ist sowohl der horizontale als auch der vertikale Winkel von Bedeutung. Der horizontale Winkel wird zur Schätzung des Querversatzes und damit zur Spurzuordnung verwendet. Der vertikale Winkel ist wichtig, um eine Unterscheidung zwischen Objekten, die überfahrbar, unterfahrbar oder gegenfahrbar sind, durchzuführen. Objekte können somit als relevante oder nicht relevante Hindernisse eingestuft werden. Dies ist insbesondere auch bei Sicherheitsanwendungen von hoher Bedeutung, um Fehlauslösungen aufgrund metallischer Gegenstände (z. B. Dosen, Kanaldeckel usw.) zu vermeiden.

Derartige Radarsensoren weisen in der Regel aus Kostengründen keine Möglichkeit zur direkten Messung von Objekthöhen bzw. Elevationswinkeln auf. Bekannte Radarsensoren mit Elevationsschätzung realisieren dies beispielsweise durch eine mechanische Schwenkung oder indirekt über eine zeitliche Auswertung des Rückstreuverhaltens von Objekten.

Wegen ihrer flachen Bauform und leichten Herstellbarkeit, beispielsweise im Ätzverfahren, eignen sich sogenannte planare Antenneneinrichtungen oder Patch-Antennen für den Einsatz in den vorstehend genannten Radarsensoren besonders. Bei derartigen Antennen handelt es sich um eine flächige Anordnung von strahlenden Resonatoren (Antennenelemente bzw. Patch-Elemente / Patches), die jeweils mit definierter Amplitude und Phase belegt sind. Die Überlagerung der Strahlungsdiagramme der einzelnen Patch-Elemente ergibt das resultierende Strahlungsdiagramm der Antenne, wobei die Zeilen, die Charakteristik des Azimuts und die Spalten für die Charakteristik der Elevation verantwortlich sind. Die Antennenelemente können in vertikaler Richtung parallel übereinander in Antennenelementzeilen angeordnet sein.

Eine synchrone Messung der horizontalen und vertikalen Objektwinkel wird bei Antenneneinrichtungen oft durch zweidimensionale Antennenarrays mit großem Hardware- und Rechenaufwand erreicht.

In der DE 10 2004 039 743 A1 ist eine Antennenstruktur mit Patch-Elementen angegeben.

Aus der DE 102 56 524 A1 ist eine Einrichtung zur Messung von Winkelpositionen unter Verwendung von Radarpulsen und sich überlappenden Strahlcharakteristiken mindestens zweier Antennenelemente bekannt.

Die DE 10 2007 036 262 A1 betrifft einen Radarsensor für Kraftfahrzeuge, mit einer Sende- und Empfangseinrichtung für Mikrowellen, bei der voneinander unabhängige Strahlformungseinrichtungen für den Azimut und die Elevation vorgesehen sind und die Strahlformungseinrichtung für die Elevation eine Zylinderlinse aufweist.

Darüber hinaus ist in der JP 2008151583 A ein zweidimensionales Antennenarray angegeben.

Die Offenlegungsschrift EP 0 805 360 A2 zeigt ein Radarmodul mit mehreren Empfangsantennenelementen und mehreren Sendeantennenelementen, wobei die Empfangsantennenelemente gegenüber den Sendeantennenelementen verschoben sind.

Die Offenlegungsschrift WO 03/067709 A1 zeigt eine Vorrichtung zum Senden und Empfangen elektromagnetischer Strahlung, die zum Senden und zum Empfangen der elektromagnetischen Strahlung getrennte Antennen aufweist und bei der die Antennenkeulen der Sende- und Empfangsantennen mittels eines gemeinsamen fokussierenden Mittels fokussiert werden.

### Offenbarung der Erfindung

Erfindungsgemäß wird eine Antenneneinrichtung für eine Radarsensorvorrichtung vorgeschlagen mit mehreren in einer Ebene in vertikaler oder horizontaler Richtung parallel zueinander angeordneten Antennenelementreihen, welche jeweils wenigstens zwei Antennenelemente, insbesondere Patch-Elemente, und zugehörige Phasenzentren aufweisen, und welche in Abstand zu einer strahlformenden Zylinderlinse angeordnet sind, wobei wenigstens zwei Antennenelementreihen mit deren zugehörigen Phasenzentren in vertikaler oder horizontaler Richtung gegeneinander verschoben sind, wobei die strahlformende Zylinderlinse derart angeordnet und ausgebildet ist, dass die von den wenigstens zwei Antennenelementreihen ausgehende Antennenstrahlung jeweils unter unterschiedlichen vertikalen oder horizontalen Winkeln fokussiert wird, wodurch die wenigstens zwei Antennenelementreihen in vertikaler oder horizontaler Richtung voneinander abweichende Richtcharakteristiken und entsprechend eine Phasendifferenz in vertikaler oder horizontaler Richtung aufweisen.

Durch diese Maßnahmen ist es in vorteilhafter Weise möglich, den Elevationswinkel und den Azimutwinkel von Objekten gleichzeitig mit einer Radarsensorvorrichtung direkt zu messen bzw. zu schätzen. Dies wird in kostengünstiger und einfacher Weise durch ein mehrzeiliges Patcharray bzw. Antennenarray in Kombination mit einer Zylinderlinse erreicht. Mehrere Antennenelementreihen sind in
Azimutrichtung oder Elevationsrichtung gegeneinander verschoben. Dadurch ergeben sich mehrere Phasenquellpunkte bzw. Phasenzentren, die jeweils in Azimut und Elevation gleichzeitig verschoben sind. Die sich über den Antennenelementen befindende Zylinderlinse verursacht zusätzlich einen Squint in einer der beiden Richtungen, während in der anderen Richtung kein Squint der Antennenbeams resultiert. Durch diese Maßnahmen wird eine gleichzeitige, rückwirkungsfreie Messung bzw. Schätzung von Horizontal- und Vertikalwinkeln eines Objekts ohne zusätzlichen Hardwareaufwand mit herkömmlichen, geringfügig modifizierten, planaren Antennen ermöglicht. Unter Phasenzentrum bzw. Phasenquellpunkt der Antennenelementzeilen wird deren elektronischer Referenzpunkt verstanden. Als Richtcharakteristik der Antennenelementzeilen wird nachfolgend die
Winkelabhängigkeit der Stärke empfangener oder gesendeter Wellen der Antennenelementreihen bzw. der Antennenelemente bezeichnet. Unter Squint wird eine Abweichung des Transmissionswinkels von der Normalen der Ebene der Antenneneinrichtung bzw. eine Schwenkung der Richtcharakteristik verstanden.

Sehr vorteilhaft ist es, wenn durch die in vertikaler oder horizontaler Richtung voneinander abweichenden Richtcharakteristiken der wenigstens zwei Antennenelementreihen sich die Amplitudenverläufe der Antennencharakteristiken der wenigstens zwei Antennenelementreihen in vertikaler oder horizontaler Richtung voneinander unterscheiden, wodurch mittels einer Auswertung der Amplitudenverläufe der Antennencharakteristiken der wenigstens zwei Antennenelementreihen in vertikaler oder horizontaler Richtung ein Elevationswinkel oder ein Azimutwinkel wenigstens eines erfassten Objekts bestimmbar ist und gleichzeitig durch eine Phasenauswertung der wenigstens zwei Antennenelementreihen ein Elevationswinkel oder ein Azimutwinkel wenigstens eines erfassten Objekts bestimmbar ist.

So können sozusagen eine Phasenauswertung und eine Amplitudenauswertung mit Hilfe einer Zylinderlinse kombiniert werden, um eine Winkelschätzung in Azimut und Elevation gleichzeitig durchzuführen.

Die Winkelschätzung in der ersten Richtung, d. h. in Azimut- oder Elevationsrichtung, erfolgt hierbei über die Phasendifferenzen, während die Winkelschätzung in der von der ersten verschiedenen zweiten Richtung, d. h. in Azimut- oder Elevationsrichtung, durch eine Amplitudenauswertung, basierend auf dem Squint der Antennenbeams, verursacht durch die Zylinderlinse erfolgt. Hierzu sind entsprechend die Antennenelementreihen als in vertikaler Richtung parallel zueinander angeordnete Antennenelementzeilen oder als in horizontaler Richtung parallel zueinander angeordneten Antennenelementspalten ausgebildet.

In Anspruch 5 ist eine Radarsensorvorrichtung angegeben. Als Radarsensor kommen beispielsweise ein Long-Range-Radarsensor (LRR) ein Mid-Range-Radarsensor (MRR) oder ein Short-Range-Radarsensor (SRR) in Betracht.

Eine Vorrichtung, insbesondere ein Fahrerassistenzsystem eines Kraftfahrzeugs ist in Anspruch 6 angegeben.

Vorteilhafte Ausgestaltungen und Weiterbildungen der Erfindung ergeben sich aus den Unteransprüchen. Nachfolgend ist anhand der Zeichnung ein Ausführungsbeispiel der Erfindung prinzipmäßig beschrieben.

Es zeigen:
- Figur 1: eine schematische Darstellung der wesentlichen Komponenten eines Fahrerassistenzsystems bzw. einer adaptiven Geschwindigkeitsregelvorrichtung in einem Kraftfahrzeug;
- Figur 2: eine schematische Darstellung einer erfindungsgemäßen Antenneneinrichtung in einer ersten Ausführungsform; und
- Figur 3: eine schematische Darstellung einer erfindungsgemäßen Antenneneinrichtung in einer zweiten Ausführungsform.

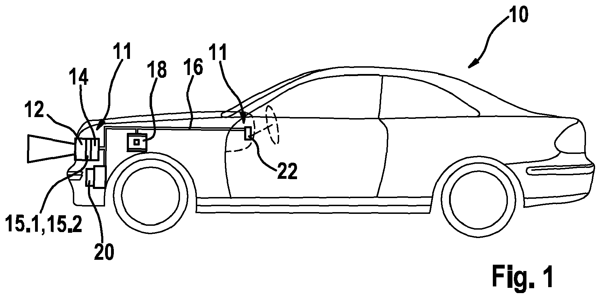

Ein in Figur 1 gezeigtes Kraftfahrzeug 10 mit einer adaptiven Geschwindigkeitsregelvorrichtung 11 als Fahrerassistenzsystem weist als Objektdetektionssensor eine an der Frontpartie des Kraftfahrzeugs 10 angebrachte Radarsensorvorrichtung 12 auf, in deren Gehäuse auch eine Steuereinrichtung 14 der adaptiven Geschwindigkeitsregelvorrichtung 11 untergebracht ist. Die Radarsensorvorrichtung 12 dient der Detektion von Objekten in einem Umfeld des Kraftfahrzeugs 10. Die Radarsensorvorrichtung 12 ist mit der Steuereinrichtung 14 verbunden. Die Steuereinrichtung 14 ist über einen Datenbus 16 (CAN, MOST, oder dergleichen) mit einer elektronischen Antriebs-Steuereinheit 18, einer Bremssystem-Steuereinheit 20 sowie mit einer HMI-Steuereinheit 22 einer Mensch-/Maschine-Schnittstelle verbunden. In weiteren, nicht dargestellten Ausführungsbeispielen können die Steuereinheit 14 und die HMI-Steuereinheit 22 auch in einer Steuereinrichtung der adaptiven Geschwindigkeitsregelvorrichtung 12, insbesondere in einem gemeinsamen Gehäuse integriert sein.

Die Radarsensorvorrichtung 12 misst mit Hilfe eines Mehrstrahlradars die Abstände, Relativgeschwindigkeiten, Elevations- und Azimutwinkel von vor dem Kraftfahrzeug 10 befindlichen Objekten, welche Radarwellen reflektieren. Die in regelmäßigen Zeitabständen, beispielsweise alle 10 ms, empfangenen Rohdaten werden in der Steuereinrichtung 14 ausgewertet, um einzelne Objekte zu identifizieren und zu verfolgen und um insbesondere ein unmittelbar auf der eigenen Fahrspur vorausfahrendes Fahrzeug zu erkennen und als Zielobjekt auszuwählen.

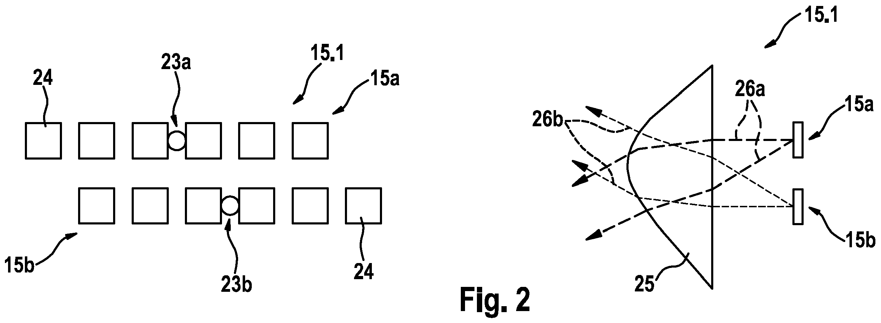

Wie weiter aus Figur 1 ersichtlich, weist die Radarsensorvorrichtung 12 eine erfindungsgemäße Antenneneinrichtung 15.1, 15.2 (siehe Figur 2) auf, mit welcher gleichzeitig ein vertikaler Winkel (Elevationswinkel) und ein horizontaler Winkel (Azimutwinkel) von erfassten Objekten bestimmt bzw. geschätzt werden kann.

In Figur 2 ist die erfindungsgemäße Antenneneinrichtung 15.1 in einer ersten Ausführungsform für die Radarsensorvorrichtung 12 näher dargestellt. Dabei sind im linken Teilbild als Antennenelementreihen Antennenelementzeilen 15a, 15b mit ihren Phasenquellpunkten 23a, 23b in einer Vorderansicht vereinfacht dargestellt. Die Antennenelementzeilen 15a, 15b sind in vertikaler Richtung bzw. in Elevation parallel zueinander angeordnet und weisen jeweils sechs Antennenelemente 24 bzw. Patch-Elemente auf. Wie aus dem rechten Teilbild von Figur 2 ersichtlich, sind die Antennenelementzeilen 15a, 15b in Abstand zu einer strahlformenden Zylinderlinse 25 angeordnet. Das rechte Teilbild der Antenneneinrichtung 15.1 in Figur 2 stellt eine seitliche Ansicht dar. Im linken Teilbild ist daher die Zylinderlinse 25 nicht gezeigt, da sozusagen durch sie hindurch geschaut wird. Wie aus Figur 2 ersichtlich, sind die zwei Antennenelementzeilen 15a, 15b mit deren zugehören Phasenzentren 23a, 23b in azimutaler bzw. horizontaler Richtung gegeneinander verschoben, wobei die strahlformende Zylinderlinse 25 derart angeordnet und ausgebildet ist, dass die jeweils von den zwei Antennenelementzeilen 15a, 15b ausgehende Antennenstrahlung 26a, 26b unter unterschiedlichen vertikalen Winkeln fokussiert wird, wodurch die zwei Antennenelementzeilen 15a, 15b in vertikaler Richtung voneinander abweichende Richtcharakteristiken und in horizontaler Richtung eine Phasendifferenz aufweisen.

Durch die Zylinderlinse 25 resultiert in Elevationsrichtung ein Squint, d. h. die Hauptstrahlrichtungen 26a, 26b der einzelnen Antennenelementzeilen 15a, 15b sind unterschiedlich.

Durch die in vertikaler Richtung voneinander abweichenden Richtcharakteristiken der Antennenelementzeilen 15a, 15b unterscheiden sich die Amplitudenverläufe der Antennencharakteristiken der zwei Antennenelementzeilen 15a, 15b in vertikaler Richtung voneinander, wodurch mittels einer Auswertung der Amplitudenverläufe der Antennencharakteristiken der Antennenelementzeilen 15a, 15b in vertikaler Richtung ein Elevationswinkel wenigstens eines erfassten Objekts bestimmbar ist. Durch eine Phasenauswertung der Antennenelementzeilen 15a, 15b ist ein Azimutwinkel wenigstens eines erfassten Objekts bestimmbar. Selbstverständlich könnte die Antenneneinrichtung noch weitere Antennenelementzeilen aufweisen, die ihrerseits auch entsprechend verschoben sein könnten.

Sonach kann über eine Amplitudenauswertung der beiden Antennenelementzeilen 15a, 15b eine Winkelschätzung in Elevation stattfinden. Gleichzeitig kann in vorteilhafter Weise eine Winkelschätzung in Azimut über eine Phasenauswertung der Antennenelementzeilen 15a, 15b erfolgen.

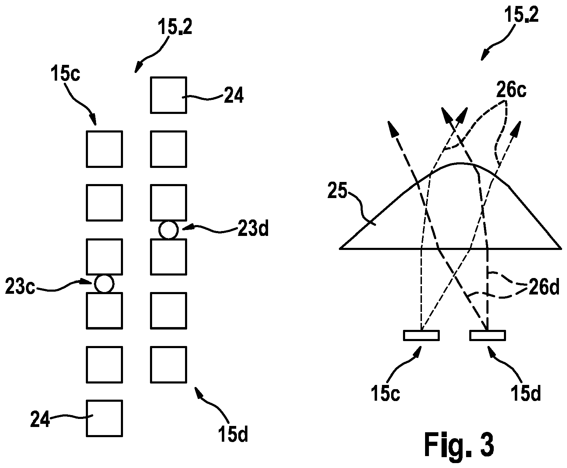

In Figur 3 ist die erfindungsgemäße Antenneneinrichtung 15.2 in einer zweiten Ausführungsform für die Radarsensorvorrichtung 12 näher dargestellt. Dabei sind im linken Teilbild als Antennenelementreihen Antennenelementspalten 15c, 15d mit ihren Phasenquellpunkten 23c, 23d in einer Vorderansicht vereinfacht dargestellt. Die Antennenelementspalten 15c, 15d sind in horizontaler Richtung parallel zueinander angeordnet und weisen ebenfalls jeweils sechs Antennenelemente 24 bzw. Patch-Elemente auf. Wie aus dem rechten Teilbild von Figur 3 ersichtlich, sind die Antennenelementspalten 15c, 15d in Abstand zu der strahlformenden Zylinderlinse 25 angeordnet. Das rechte Teilbild der Antenneneinrichtung 15.2 in Figur 3 stellt eine seitliche Ansicht dar. Im linken Teilbild ist daher die Zylinderlinse 25 nicht gezeigt, da wiederum sozusagen durch sie hindurch geschaut wird. Wie aus Figur 3 ersichtlich, sind die zwei Antennenelementspalten 15c, 15d mit deren zugehören Phasenzentren 23c, 23d in vertikaler Richtung gegeneinander verschoben, wobei die strahlformende Zylinderlinse 25 derart angeordnet und ausgebildet ist, dass die jeweils von den zwei Antennenelementspalten 15c, 15d ausgehende Strahlung 26c, 26d unter unterschiedlichen Azimutwinkeln abgegeben wird, und wobei die wenigstens zwei Antennenelementspalten 15c, 15d in horizontaler Richtung voneinander abweichende Richtcharakteristiken und eine Phasendifferenz in vertikaler Richtung aufweisen.

Durch die Zylinderlinse 25 resultiert in Azimutrichtung ein Squint, d. h. die Hauptstrahlrichtungen 26c, 26d der einzelnen Antennenelementspalten 15c, 15d sind unterschiedlich.

Durch die in horizontaler Richtung voneinander abweichenden Richtcharakteristiken der Antennenelementspalten 15c, 15d unterscheiden sich die Amplitudenverläufe der Antennencharakteristiken der zwei Antennenelementspalten 15c, 15d in horizontaler Richtung voneinander, wodurch mittels einer Auswertung der Amplitudenverläufe der Antennencharakteristiken der Antennenelementspalten 15c, 15d in horizontaler Richtung ein Azimutwinkel wenigstens eines erfassten Objekts bestimmbar ist. Durch eine Phasenauswertung der Antennenelementspalten 15c, 15d ist ein Elevationswinkel wenigstens eines erfassten Objekts bestimmbar. Selbstverständlich könnte die Antenneneinrichtung noch weitere Antennenelementzeilen aufweisen, die ihrerseits auch entsprechend verschoben sein könnten.

Sonach kann über eine Phasenauswertung der beiden Antennenelementspalten 15c, 15d eine Winkelschätzung in Elevation stattfinden. Gleichzeitig kann in vorteilhafter Weise eine Winkelschätzung in Azimut über eine Amplitudenauswertung der Antennenelementzeilen 15c, 15d erfolgen.

## Patentansprüche

1. Antenneneinrichtung (15.1,15.2) für eine Radarsensorvorrichtung (12), mit mehreren in einer Ebene in vertikaler oder horizontaler Richtung parallel zueinander angeordneten Antennenelementreihen (15a-15d), welche jeweils wenigstens zwei Antennenelemente (24), insbesondere Patch-Elemente, und zugehörige Phasenzentren (23a-23d) aufweisen, und eine strahlformende Zylinderlinse (25) aufweist,
**dadurch gekennzeichnet, dass**
wenigstens zwei Antennenelementreihen (15a-15d) mit deren zugehörigen Phasenzentren (23a-23d) in vertikaler oder horizontaler Richtung gegeneinander verschoben sind,
wobei die strahlformende Zylinderlinse (25) derart angeordnet und ausgebildet ist,
dass die von den wenigstens zwei Antennenelementreihen (15a-15d) ausgehende Antennenstrahlung (26a-26d) jeweils unter unterschiedlichen vertikalen oder horizontalen Winkeln fokussiert wird,
wodurch die wenigstens zwei Antennenelementreihen (15a-15d) in vertikaler oder horizontaler Richtung voneinander abweichende Richtcharakteristiken und entsprechend in vertikaler oder horizontaler Richtung eine Phasendifferenz aufweisen,
so dass sich durch die in vertikaler oder horizontaler Richtung voneinander abweichenden Richtcharakteristiken der wenigstens zwei Antennenelementreihen (15a-15d) die Amplitudenverläufe der Antennencharakteristiken der wenigstens zwei Antennenelementreihen (15a-15d) in vertikaler oder horizontaler Richtung voneinander unterscheiden,
wodurch mittels einer Phasenauswertung und einer Auswertung der Amplitudenverläufe der Antennencharakteristiken der wenigstens zwei Antennenelementreihen (15a-15d) in vertikaler oder horizontaler Richtung ein Elevationswinkel und ein Azimutwinkel wenigstens eines erfassten Objekts bestimmbar ist.

2. Antenneneinrichtung nach Anspruch 1, **dadurch gekennzeichnet, dass** die Antennenelementreihen als in vertikaler Richtung parallel zueinander angeordnete Antennenelementzeilen (15a,15b) oder als in horizontaler Richtung parallel zueinander angeordneten Antennenelementspalten (15c,15d) ausgebildet sind.

3. Radarsensorvorrichtung (12) mit wenigstens einer Antenneneinrichtung (15.1,15.2) gemäß einem der Ansprüche 1 oder 2.

4. Vorrichtung, insbesondere Fahrerassistenzsystem (11) eines Kraftfahrzeugs (10) mit wenigstens einer Radarsensorvorrichtung (12) gemäß Anspruch 3 zur Detektion von Objekten in einem Umfeld des Kraftfahrzeugs (10), und einer Steuereinrichtung (14), welche mit der wenigstens einen Radarsensorvorrichtung (12) verbunden ist.

## Claims

1. Antenna device (15.1, 15.2) for a radar sensor apparatus (12), having a plurality of rows (15a-15d) of antenna elements which are arranged parallel to one another in the vertical or horizontal direction in a plane and each have at least two antenna elements (24), in particular patch elements, and associated phase centres (23a-23d), and having a beam-shaping cylindrical lens (25),
**characterized in that**
at least two rows (15a-15d) of antenna elements with their associated phase centres (23a-23d) are shifted with respect to one another in the vertical or horizontal direction,
wherein the beam-shaping cylindrical lens (25) is arranged and formed in such a manner that the antenna radiation (26a-26d) coming from the at least two rows (15a-15d) of antenna elements is respectively focused at different vertical or horizontal angles,
as a result of which the at least two rows (15a-15d) of antenna elements have directional characteristics which differ from one another in the vertical or horizontal direction and accordingly have a phase difference in the vertical or horizontal direction,
with the result that the amplitude profiles of the antenna characteristics of the at least two rows (15a-15d) of antenna elements differ from one another in the vertical or horizontal direction as a result of the directional characteristics of the at least two rows (15a-15d) of antenna elements which differ from one another in the vertical or horizontal direction,
as a result of which an elevation angle and an azimuth angle of at least one captured object can be determined by means of a phase evaluation and an evaluation of the amplitude profiles of the antenna characteristics of the at least two rows (15a-15d) of antenna elements in the vertical or horizontal direction.

2. Antenna device according to Claim 1, **characterized in that** the rows of antenna elements are in the form of lines (15a, 15b) of antenna elements arranged parallel to one another in the vertical direction or in the form of columns (15c, 15d) of antenna elements arranged parallel to one another in the horizontal direction.

3. Radar sensor apparatus (12) having at least one antenna device (15.1, 15.2) according to either of Claims 1 and 2.

4. Apparatus, in particular driver assistance system (11) of a motor vehicle (10), having at least one radar sensor apparatus (12) according to Claim 3 for detecting objects in an environment of the motor vehicle (10) and a control device (14) which is connected to the at least one radar sensor apparatus (12).

## Revendications

1. Appareil à antenne (15.1, 15.2) pour un dispositif de détection radar (12), comprenant plusieurs rangées d'éléments d'antenne (15a-15d) disposés parallèlement les uns aux autres dans un plan dans la direction verticale ou horizontale, lesquelles possèdent respectivement au moins deux éléments d'antenne (24), notamment des éléments correctifs, et des centres de phase (23a-23d) associés, et une lentille cylindrique (25) de formation de rayon, **caractérisé en ce que**
au moins deux rangées d'éléments d'antenne (15a-15d) avec leurs centres de phase (23a-23d) associés sont décalés mutuellement dans la direction verticale ou horizontale,
la lentille cylindrique (25) de formation de rayon étant disposée et configurée de telle sorte que le rayonnement d'antenne (26a-26d) qui émane des au moins deux rangées d'éléments d'antenne (15a-15d) est à chaque fois concentré sous des angles verticaux ou horizontaux différents,
ce qui a pour effet que les au moins deux rangées d'éléments d'antenne (15a-15d) présentent des caractéristiques directives différentes les unes des autres dans la direction verticale ou horizontale et, par conséquent, une différence de phase dans la direction verticale ou horizontale,
de sorte que du fait des caractéristiques directives différentes les unes des autres dans la direction verticale ou horizontale des au moins deux rangées d'éléments d'antenne (15a-15d), les caractéristiques d'antenne des au moins deux rangées d'éléments d'antenne (15a-15d) sont différentes les unes des autres dans la direction verticale ou horizontale,
ce qui a pour effet qu'il est possible de déterminer un angle d'élévation et un angle d'azimut d'au moins un objet détecté au moyen d'une interprétation des phases et d'une interprétation des courbes d'amplitude des caractéristiques d'antenne des au moins deux rangées d'éléments d'antenne (15a-15d) dans la direction verticale ou horizontale.

2. Appareil à antenne selon la revendication 1, **caractérisé en ce que** les rangées d'éléments d'antenne sont réalisées sous la forme de lignes d'éléments d'antenne (15a, 15b) disposées parallèlement les unes aux autres dans la direction verticale ou sous la forme de colonnes d'éléments d'antenne (15c, 15d) disposées parallèlement les unes aux autres dans la direction horizontale.

3. Dispositif de détection radar (12) comprenant au moins un appareil à antenne (15.1, 15.2) selon l'une des revendications 1 ou 2.

4. Dispositif, notamment système d'assistance au conducteur (11) d'un véhicule automobile (10) comprenant au moins un dispositif de détection radar (12) selon la revendication 3 pour la détection d'objet dans un environnement du véhicule automobile (10), et un appareil de commande (14) qui est relié à l'au moins un dispositif de détection radar (12).
